Europäisches Patentamt

European Patent Office

Office européen des brevets

(19)

(11) Veröffentlichungsnummer: **0 177 516**
**B1**

(12) **EUROPÄISCHE PATENTSCHRIFT**

(45) Veröffentlichungstag der Patentschrift:
**24.02.88**

(51) Int. Cl.⁴: **F 16 B 7/22**

(21) Anmeldenummer: **85901332.8**

(22) Anmeldetag: **28.03.85**

(86) Internationale Anmeldenummer:
**PCT/CH 85/00048**

(87) Internationale Veröffentlichungsnummer:
**WO 85/04456 (10.10.85 Gazette 85/22)**

(54) **LINEARKUPPLUNG.**

(30) Priorität: **28.03.84 CH 1549/84**
**14.09.84 CH 4381/84**

(43) Veröffentlichungstag der Anmeldung:
**16.04.86 Patentblatt 86/16**

(45) Bekanntmachung des Hinweises auf die Patenterteilung:
**24.02.88 Patentblatt 88/8**

(84) Benannte Vertragsstaaten:
**CH DE FR GB LI**

(56) Entgegenhaltungen:
**DE-A-2 043 274**
**FR-A-2 249 222**
**GB-A-744 030**
**US-A-4 143 986**
**US-A-4 408 926**

(73) Patentinhaber: **ELGER, Gerd, Neftenbacherstrasse 26, CH- 8408 Winterthur (CH)**

(72) Erfinder: **ELGER, Gerd, Neftenbacherstrasse 26, CH- 8408 Winterthur (CH)**

(74) Vertreter: **Puschmann, Heinz H., Spott und Puschmann Patentanwälte Sendlinger- Tor- Platz 11, D-8000 München 2 (DE)**

## Beschreibung

Die Erfindung betrifft eine ein- und auskuppelbare Linearkupplung zur Übertragung grosser Zug- und Wechselkräfte, wie sie bei Transport und Montage von Betonfertigteilen, bei Fahrzeug-Kupplungen, beim Container-Verladen, etc. auftreten.

Die zur Zeit bekannten Kupplungen für Betonfertigteile, wie in CH-PS-535 180, 562 382 und 620 261 beschrieben, haben allesamt den Nachteil, dass zum Einkuppeln oder Verriegeln bzw. Entriegeln und Auskuppeln Dreh- oder Horizontalbewegungen nötig sind.

Es sind Fahrzeugkupplungen (Strassenbahn) bekannt, welche die obigen Nachteile nicht aufweisen und sogar ein automatisches Einkuppeln erlauben, aber bei weitem nicht spielfrei sind, dafür gross und schwer.

Aufgabe der Erfindung ist es, ein Kupplungselement zu schaffen, welches grossen Zug- und Wechselkräften, spielfrei, bei kleinen Abmessungen im rauhen Betrieb (Bauplatz, Bahn, Hafen) langfristig gewachsen ist, einen automatischen Betrieb ermöglicht, dabei ein Maximum an Sicherheit bietet und sich rationell fertigen, montieren und auswechseln lässt. Auch bei Wellenversatz oder nichtfluchtenden Teilen soll ein Zusammenkoppeln möglich sein.

Die erfindungsgemässe Kupplung, die diesen Anforderungen genügt, ist im Patentanspruch 1 beschrieben. Bevorzugte Ausführungsformen und Weiterbildungen ergeben sich aus den abhängigen Ansprüchen.

Im Nachstehenden soll an Hand dreier in Fig. 1-4, 5-8, und 9-12 dargestellten Ausführungsbeispielen Aufbau und Funktion der erfindungsgemässen Kupplung erläutert werden.

Fig. 1 ist eine teilweise geschnittene Ansicht der Kupplung im entriegelten Zustand.

Fig. 2 zeigt einen Schnitt nach der Linie II - II der Fig. 1.

Fig. 3 ist eine teilweise geschnittene Ansicht der Kupplung im verriegelten Zustand.

Fig. 4 zeigt einen Schnitt nach der Linie IV - IV der Fig. 3.

Fig. 5 ist eine teilweise geschnittene Ansicht der schlanken, staubgeschützten Kupplung ohne bewegte Aussenteile im entriegelten Zustand.

Fig. 6 zeigt einen Schnitt nach der Linie VI - VI der Fig. 5.

Fig. 7 ist eine teilweise geschnittene Ansicht der schlanken, staubgeschützten Kupplung ohne bewegte Aussenteile im verriegelten Zustand.

Fig. 8 zeigt einen Schnitt nach der Linie VIII - VIII der Fig. 7.

Fig. 9 ist eine teilweise geschnittene Ansicht der kurzen Kupplung zur zusätzlichen Übertragung grosser Radialkräfte im entriegelten Zustand.

Fig. 10 zeigt einen Schnitt nach der Linie X - X der Fig. 9.

Fig. 11 ist eine teilweise geschnittene Ansicht der kurzen Kupplung zur zusätzlichen Übertragung grosser Radialkräfte im verriegelten Zustand.

Fig. 12 zeigt einen Schnitt nach der Linie XII - XII der Fig. 11.

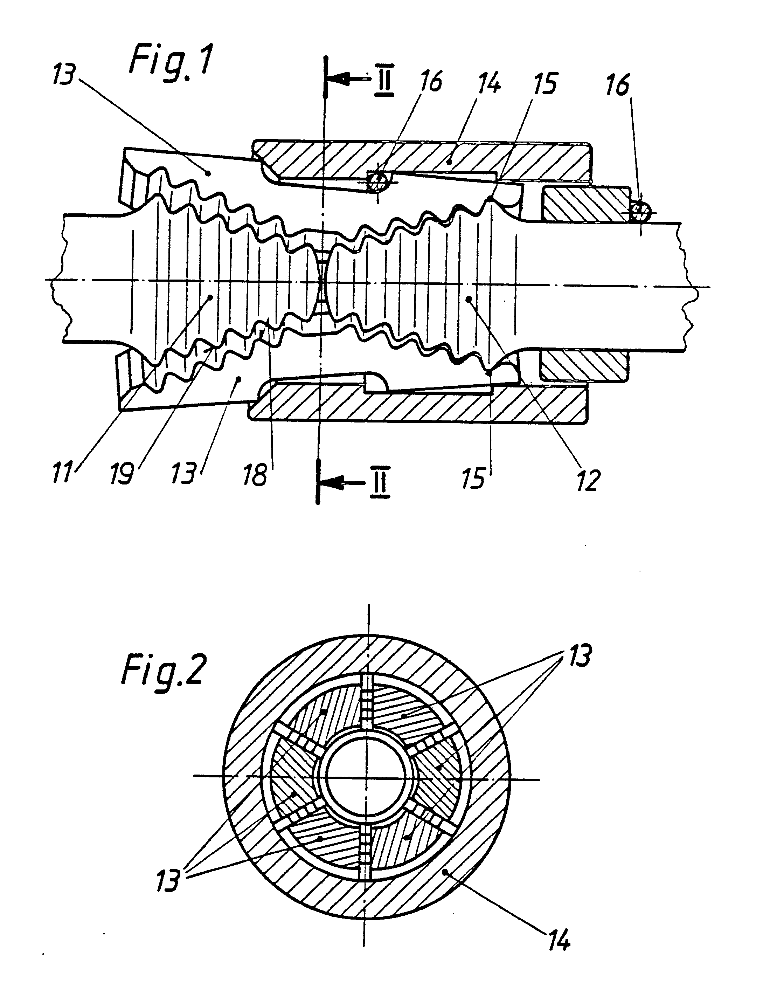

## Normale Kupplung Fig. 1 - 4

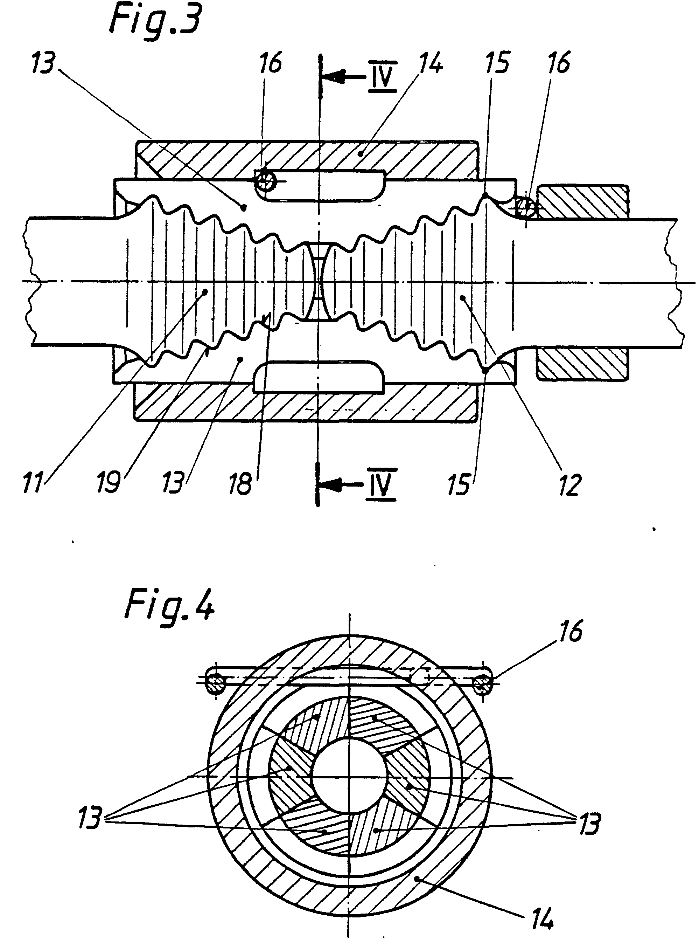

Die Kupplungsglieder 11, 12 bestehen aus einem tannenbaumähnlichen, aussengewellten Konus, dieser ist fest mit dem Fördergut verbunden. Ein identischer Konus ist mit dem Kranseil verbunden. Die Verbindungsorgane 13 bestehen aus sechs Segmenten, welche mit ihrer Innenwellung 18 die Aussenwellung 19 der Tannenbaum-Konen formschlüssig umschliessen. Die Schiebebüchse 14 hält einerseits die Segmente zusammen und bewirkt andererseits, dass beim Verriegeln die offenen Seiten der Segmente nach innen geschwenkt werden, wobei die letzte Wellung am entsprechenden Konus an den Drehpunkten 15 als Stütze dient. Die Bügelfeder 16 verhindert sowohl das ungewollte Verriegeln (Fig. 1) als auch das ungewollte Entriegeln (Fig. 3) der Kupplung und dient so als Sicherheitselement.

Funktionen:

Sollen Transportobjekte mit Krananlagen (oder Fahrzeuge) kraftschlüssig verbunden werden, so ist der kranseitige Teil der Kupplung mit geöffneten Segmenten (Fig. 1) über den Konus des zu verbindenden Teils zu fahren, bis die beiden Konen sich berühren; danach ist die Bügelfeder 16 anzuheben und die Schiebebüchse 14 richtungsgleich zu verschieben, bis die Bügelfeder 16 wieder einrastet (Fig. 3).

Zum Auskuppeln (im entlasteten Zustand) ist wie folgt vorzugehen: Bügelfeder 16 anheben, Schiebebüchse 14 zurückziehen bis Bügelfeder 16 wieder einrastet, Kupplung ist gelöst.

Solange die Kupplung unter Zug oder Druck steht, ist ein Auskuppeln unmöglich, da die Segmente proportional zur Belastung radial gegen die Schiebebüchse 14 gedrückt werden, so dass diese durch erhöhte Reibung am Verschieben gehindert wird. Dies ist ein Vorteil im Hinblick auf erhöhte Sicherheit, besonders im automatischen Betrieb bei Stromausfall oder anderen Störungen.

Variante:

In Fällen, wo es besonders auf Spielfreiheit ankommt - auch nach jahrelangem Betrieb und entsprechendem Verschleiss - kann diese Forderung durch folgende Massnahme erfüllt werden:

Schiebebüchse und Segmentkranz sind nicht mehr zylindrisch zu gestalten, sondern sollen einen gemeinsamen Konus bilden.

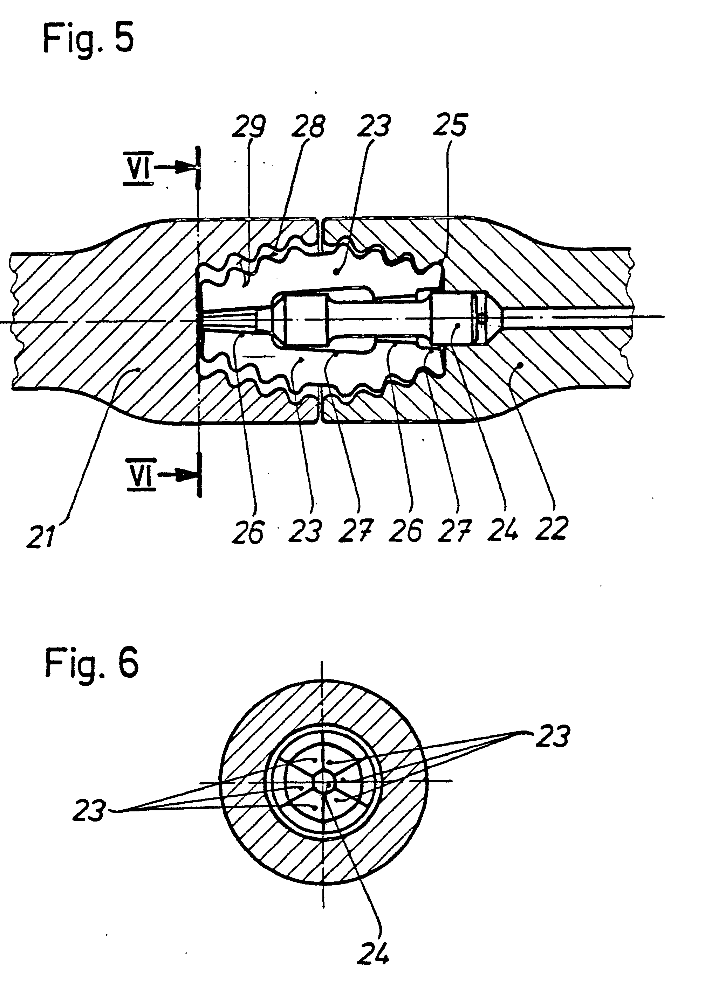

## Schlanke Kupplung Fig. 5 - 8

Ein Kupplungsglied 21 mit einem tannenbaumähnlichen innengewellten Konus mit einer Wellung 29 ist fest mit dem Fördergut verbunden. Ein Kupplungsglied 22 mit einem identischen Konus ist mit dem Kranseil verbunden.

Die Verbindungsorgane 23 bestehen aus sechs Segmenten mit Aussenwellungen 28 und gemeinsamer Bohrung 26 und befinden sich im Innern der Konen. Der Betätigungszylinder 24 befindet sich in Entriegelungsstellung im Zentrum der Bohrung 26, was durch die Ausnehmung 27 ein Zentralisieren der Segmente und damit die Entriegelung zur Folge hat.

Funktionen:

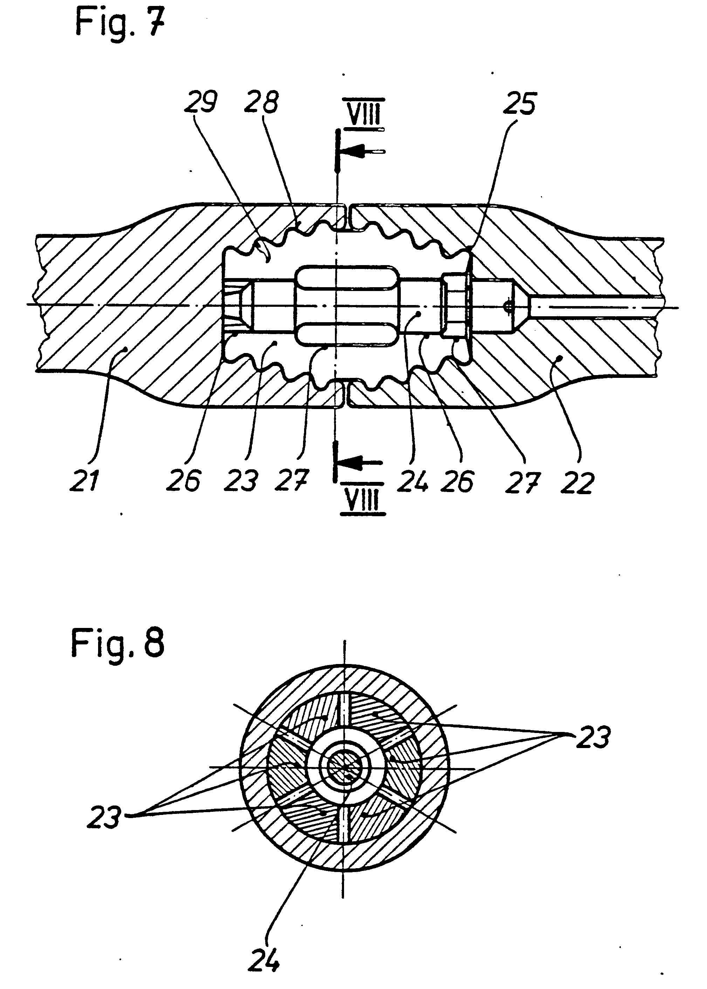

Sollen Transportobjekte mit Krananlagen (oder Fahrzeuge) kraftschlüssig verbunden werden, so ist der kranseitige Teil der Kupplung mit zentralisierten Segmenten (Fig. 5) in den Konus 21 des fördergutseitigen Teils der Kuppluung zu fahren und der Betätigungszylinder 24 richtungsgleich zu verschieben, was die Spreizung der Segmente bewirkt und die Kupplung in den verriegelten Zustand (Fig. 7) bringt.

Zum Auskuppeln ist der Betätigungszylinder 24 in Gegenrichtung zu verschieben, sodass dank der Ausnehmung 27 die Segmente sich zentralisieren können, wobei sie um die Drehpunkte 25 schwenkent und die Kupplung gelöst ist.

Variante:

In Fällen wo es besonders auf Spielfreiheit ankommt - auch nach jahrelangem Betrieb und entsprechendem Verschleiss - kann diese Forderung durch folgende Massnahmen erfüllt werden:

Betätigungszylinder 24 und Bohrung 26 sind nicht mehr zylindrisch zu gestalten, sondern sollen einen gemeinsamen Konus bilden.

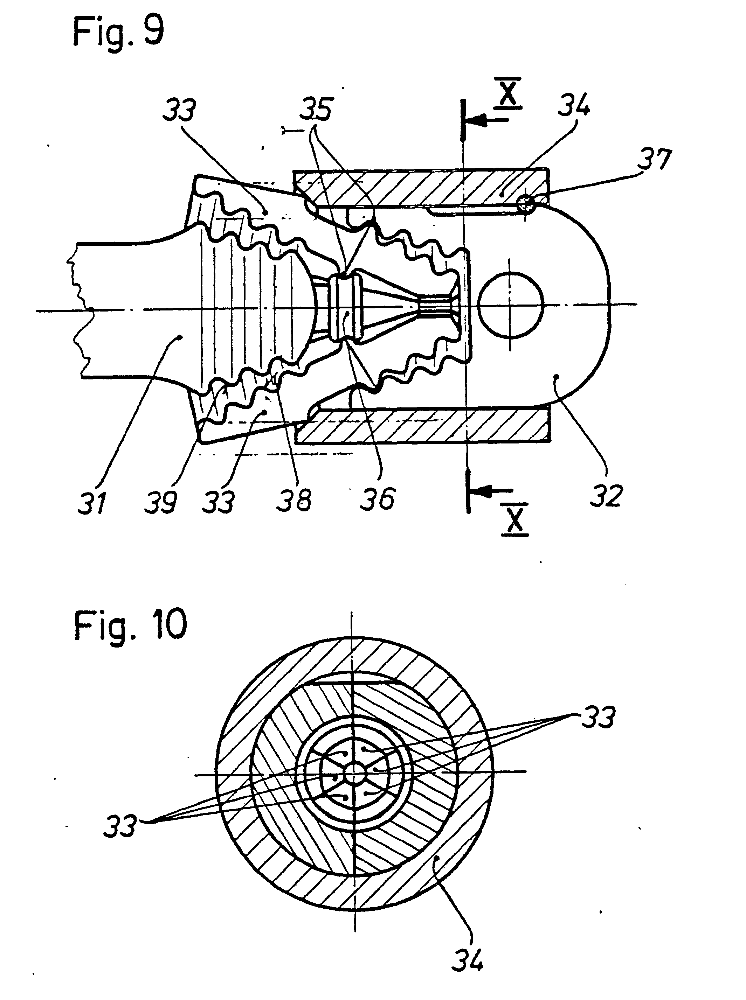

## Kurze Kupplung Fig. 9 - 12

Ein Kupplungsglied 31 mit einem tannenbaumähnlichen aussengewellten Konus mit einer Wellung 39 ist fest mit dem Fördergut verbunden. Ein Kupplungsglied 32 mit einem entsprechend innengewellten Konus 32 ist mit dem Kranseil verbunden.

Die Verbindungsorgane 33 bestehen aus sechs Segmenten mit Wellung 38. Diese umschliessen fördergutseitig den Aussenkonus 31 und ragen kranseitig in den Hohlkonus, wobei sie sich an Drehpunkten 35 im Hohlkonus und auf der fliegenden Scheibe 36 abstützen. Die Schiebebüchse 34 hält einerseits die Segmente zusammen und bewirkt andererseits, dass beim Verriegeln die offenen Seiten der Segmente nach innen geschwenkt werden und die geschlossenen nach aussen. Drehpunkte sind dabei die fliegende Scheibe 36, und die vorderste Rille am Hohlkonus.

Funktionen:

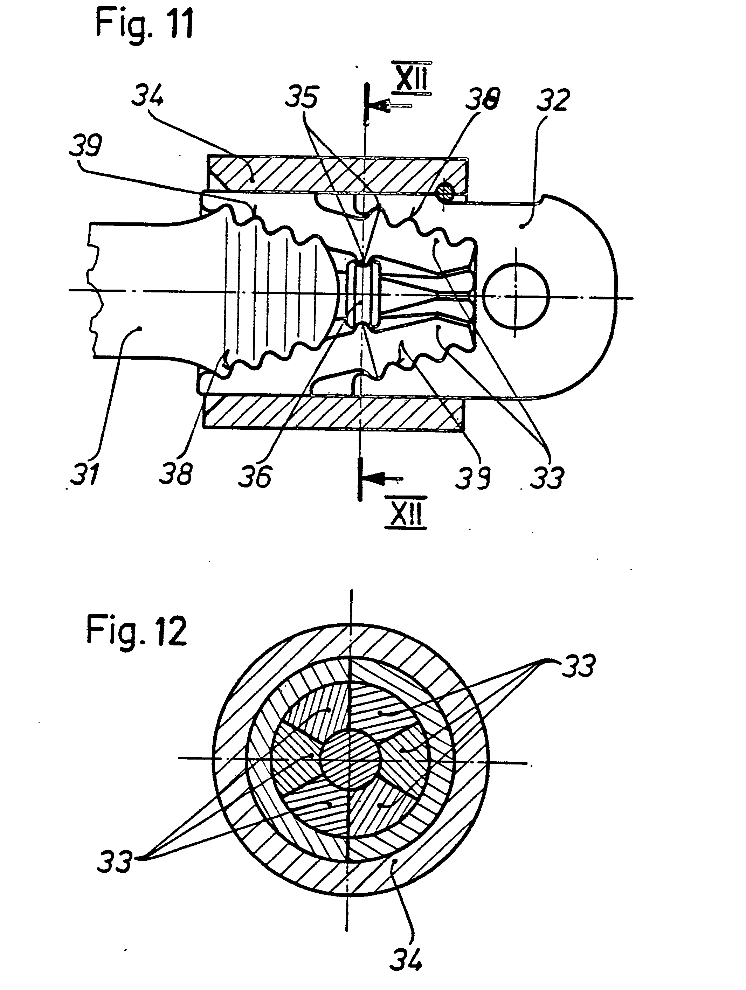

Zum Einkuppeln ist der kranseitige Teil der Kupplung mit geöffneten Segmenten (Fig. 9) über den Konus des zu verbindenden Teils zu fahren und die Schiebebüchse 34 richtungsgleich zu verschieben bis zum Anschlag (Fig. 11).

Zum Auskuppeln ist die Schiebebüchse 34 bis zum Anschlag in Gegenrichtung zu verschieben, sodass die Segmente sich mit ihren aussengewellten Hälften zentralisieren und mit ihren innengewellten Hälften spreizen (Fig. 9), wobei sie sich um die Drehpunkte 35 drehen.

In der Schiebebüchse befindet sich ein Element 37 zur Fixierung der beiden Endstellungen.

Variante:

In Fällen, wo es besonders auf Spielfreiheit . ankommt - auch nach jahrelangem Betrieb und entsprechendem Verschleiss - kann diese Forderung durch folgende Massnahme erfüllt werden:

Schiebebüchse und Segmentkranz - innengewellter Teil - sind nicht mehr zylindrisch zu gestalten, sondern sollen einen gemeinsamen Konus bilden.

## Patentansprüche

1. Ein- und auskuppelbare Linearkupplung zur spielfreien Übertragung von grossen Zug- und Wechselkräften mit zwei miteinander zu verbindenden Kupplungsgliedern und einem Verbindungsorgan dadurch gekennzeichnet, dass die beiden Kupplungsglieder (11, 12 bzw. 21, 22 bzw. 31, 32) im wesentlichen rotationssymmetrisch ausgebildet und mit einer im wesentlichen konischen, im Schnitt tannenbaumähnlich gewellten Oberfläche (19 bzw. 29 bzw. 39) versehen sind, dass das Verbindungsorgan (13 bzw. 23 bzw. 33) eine zu den Kupplungsgliedern komplementäre Oberfläche (18 bzw. 28 bzw. 38) aufweist und radial spreizbar bzw. zentralisierbar ausgebildet ist, wobei es im gespreizten oder zentralisierten Zustand die beiden Kupplungsglieder (11, 12 bzw. 21, 22 bzw. 31, 32) formschlüssig und spielfrei erfasst und verbindet, und im jeweils anderen Zustand mit wenigstens einem der Kupplungsglieder (11, 12 bzw. 21, 22 bzw. 31, 32) ausser Eingriff ist, und dass ein Schliessorgan (14 bzw. 24 bzw. 34) vorgesehen ist, mit welchem das Verbindungsorgan (13 bzw. 23 bzw. 33) zentralisiert bzw. gespreizt werden kann.

2. Kupplung nach Anspruch 1, dadurch gekennzeichnet, dass beide Kupplungsglieder (11, 12) im wesentlichen kegelförmig sind.

3. Kupplung nach Anspruch 1, dadurch gekennzeichnet, dass beide Kupplungsglieder (21, 22) im wesentlichen hohlkegelig ausgebildet sind.

4. Kupplung nach Anspruch 1, dadurch gekennzeichnet, dass ein Kupplungsglied (31) im wesentlichen kegelförmig und ein Kupplungsglied (32) im wesentlichen hohlkegelförmig ausgebildet ist, und dass das Verbindungsorgan (33) einen im wesentlichen kegelförmigen Teil und einen im wesentlichen hohlkegelförmigen Teil aufweist.

5. Kupplung nach Anspruch 2 oder 4, dadurch gekennzeichnet, dass das Schliessorgan (14 bzw. 34) eine zu einem Kupplungsglied (12 bzw. 32) koaxiale Schiebebüchse ist.

6. Kupplung nach Anspruch 3, dadurch gekennzeichnet, dass das Schliessorgan (24) ein in einem Kupplungsglied (22) zentral angeordneter Schiebezylinder ist.

7. Kupplung nach einem der Ansprüche 1 - 6, dadurch gekennzeichnet, dass das Verbindungsorgan (13 bzw. 23 bzw. 33) aus einer Mehrzahl von nach Art eines Bohrfutters angeordneten Segmenten besteht.

8. Kupplung nach einem der Ansprüche 1 - 7, dadurch gekennzeichnet, dass Verriegelungsmittel (16 bzw. 37) zur Fixierung des Schliessorgans in seinen beiden Endstellungen vorgesehen sind.

9. Kupplung nach einem der Ansprüche 1 - 8, dadurch gekennzeichnet, dass das Verbindungsorgan (13 bzw 23 bzw. 33) und das Schliessorgan (14 bzw. 24 bzw 34) mit einem der Kupplungsglieder (12 bzw. 22 bzw. 32) verbunden ist.

10. Kupplungen nach Anspruch 5, dadurch gekennzeichnet; dass die Schiebebüchse (14 bzw. 34) mit dem Verbindungsorgan (13 bzw. 33) über gegengleiche Konusflächen in Verbindung steht.

11. Kupplung nach einem der Ansprüche 1 -10, dadurch gekennzeichnet, dass das Schliessorgan (14 bzw. 24 bzw. 34) magnetisch oder motorisch bewegt wird.

12. Kupplung nach einem der Ansprüche 8, 9 oder 11, dadurch gekennzeichnet, dass die Verriegelungsmittel magnetisch oder motorisch bewegt werden.

13. Kupplung nach einem der Ansprüche 1 - 12, dadurch gekennzeichnet, dass die Kupplung mit einem Schutz- bzw. Zentriertrichter versehen wird.

14. Kupplung nach einem der Ansprüche 1 - 13, dadurch gekennzeichnet, dass die Kupplungsglieder (11 bzw. 21 bzw. 31) mit einem Kontakt ausgerüstet sind, der bei Berührung durch den Komplementärteil ein elektrisches-, optisches- oder akustisches Signal auslöst.

## Claims

1. A linear coupling which can be coupled and uncoupled for play-free transmission of large tensile and alternating forces, comprising two coupling elements for connecting together and one connecting means, characterised in that the two coupling elements (11, 12 or 21, 22 or 31, 32) are made substantially axially symmetrical and have a substantially conical corrugated surface, in cross-section like a pine tree (19, 29, 39), the connecting means (13, 23, 33) has a surface (18, 28, 38) matching the coupling elements and is radially spreadable or centralizable, and in the spread or centralized state respectively it surrounds and connects the two coupling elements (11, 12 or 21, 22 or 31, 32) positively and without play, whereas in any other state it is disengaged from at least one of the coupling elements (11, 12 or 21, 22 or 31, 32) and a closure means (14, 24, 34) is provided and used for centralizing or spreading the connecting means (13, 23, 33).

2. A coupling according to claim 1, characterised in that the two coupling means (11, 12) are substantially conical.

3. A coupling according to claim 1, characterised in that the two coupling elements (21, 22) are substantially hollow and conical.

4. A coupling according to claim 1, characterised in that one coupling element (31) is substantially conical and one coupling element (32) is substantially hollow and conical, and the connecting means (31) has a substantially conical part and a substantially hollow conical part.

5. A coupling according to claim 2 or 4, characterised in that the closure means (14, 34) is a sliding box coaxial with a coupling element (12, 32).

6. A coupling according to claim 3, characterised in that the closure means (24) is a sliding box centrally disposed in a coupling element (22).

7. A coupling according to any of claims 1 - 6, characterised in that the connecting means (13, 23, 33) comprises a number of segments disposed like a drill chuck.

8. A coupling according to any of claims 1 to 7, characterised in that locking means (16, 37) are provided for locking the closure means in both end positions.

9. A coupling according to any of claims 1 - 8, characterised in that the connecting means (13, 23, 33) and the closure means (14, 24, 34) is connected to one of the coupling elements (12, 22, 32).

10. A coupling according to claim 5, characterised in that the sliding box (14, 34) is connected to the connecting means (13, 33) via matching conical surfaces.

11. A coupling according to any of claims 1 to 10, characterised in that the closure means (14, 24, 34) is magnetically or motor driven.

12. A coupling according to any of claims 8, 9 or 11, characterised in that the locking means are magnetically or motor driven.

13. A coupling according to any of claims 1 to 12, characterised in that the coupling is provided with a protective or centring funnel.

14. A coupling according to any of claims 1 to 13, characterised in that the coupling elements (11, 21, 31) are equipped with a contact which, when touched by the complementary part, triggers an electric or optical or acoustic signal.

## Revendications

1. Dispositif d'accouplement linéaire pouvant être enclenché et déclenché, pour la transmission sans jeu d'efforts importants de traction et de translation, du type comprenant deux éléments d'accouplement destinés à être accouplés entre eux et un organe intermédiaire de liaison, ce dispositif étant caractérisé en ce que les deux éléments d'accouplement (11, 12; 21, 22; 31, 32), essentiellement à symétrie de révolution, présentent, vus en coupe, une surface externe généralement conique avec un profil, vu en coupe radiale, ondulé en forme d'arête de poisson; que l'organe intermédiaire de liaison (13; 23; 33) comporte une surface externe qui est complémentaire (18; 28; 38) des éléments d'accouplement et peuvent s'écarter radialement ou au contraire se rapprocher du centre de façon que, dans la position écartée, l'organe intermédiaire se bloque sur les deux éléments d'accouplement (11, 12; 21, 22; 31, 32) et les enserre en les bloquant sans jeu; que, dans l'une ou l'autre des autres conditions, au moins l'un des éléments d'accouplement (11, 12; 21, 22; 31, 32) soit déclenché, et qu'un organe de verrouillage (14; 24; 34) est prévu pour permettre de rapprocher du centre ou au contraire d'écarter du centre l'organe intermédiaire de liaison (13; 23; 33).

2. Dispositif d'accouplement selon la Revendication 1, caractérisé en ce que les deux éléments d'accouplement (11, 12) ont essentiellement une forme conique.

3. Dispositif d'accouplement selon la Revendication 1, caractérisé en ce que les deux éléments d'accouplement (11, 12) sont réalisé avec une forme se rapprochant sensiblement de celle d'un cône creux.

4. Dispositif d'accouplement selon la Revendication 1, caractérisé en ce que l'un des éléments d'accouplement (31) est réalisé avec une forme sensiblement conique, tandis qu'un autre élément d'accouplement (32) est réalisé avec une forme se rapprochant sensiblement de celle d'un cône creux, et que l'organe intermédiaire de liaison (33) comporte une partie sensiblement conique et une partie sensiblement en forme de cône creux.

5. Dispositif d'accouplement selon la Revendication 3, caractérisé en ce que l'organe de verrouillage (14; 34) est constitué par une bague coulissante (14) coaxiale à l'un des éléments d'accouplement (12; 32).

6. Dispositif d'accouplement selon la Revendication 3, caractérisé en ce que l'organe de verrouillage (24) est un cylindre coulissant disposé au milieu d'un des éléments d'accouplement (22).

7. Dispositif d'accouplement selon l'une quelconque des Revendications 1 à 6, caractérisé en ce que l'organe intermédiaire de liaison (13; 23; 33) se compose de plusieurs segments disposés à la manière des mors d'un mandrin de perceuse.

8. Dispositif d'accouplement selon l'une quelconque des Revendications 1 à 7, caractérisé en ce que des organes de blocage (16; 17) sont prévus pour maintenir l'organe de verrouillage dans l'une de ses deux positions extrêmes.

9. Dispositif d'accouplement selon l'une quelconque des Revendications 1 à 8, caractérisé en ce que l'organe intermédiaire de liaison (13; 23; 33) et l'organe de blocage (14; 24; 34) sont reliés entre eux par l'un des éléments d'accouplement 12; 22; 32).

10. Dispositif d'accouplement selon la Revendication 5, caractérisé en ce que la bague coulissante (14; 34) est reliée à l'organe intermédiaire de liaison (13; 23; 33) par l'intermédiaire de surfaces coniques diamétralement opposées.

11. Dispositif d'accouplement selon l'une quelconque des Revendications 1 à 10, caractérisé en ce que l'organe de blocage (14; 24; 34) est actionné par des moyens magnétiques ou motorisés.

12. Dispositif d'accouplement selon l'une quelconque des Revendications 8, 9 ou 11, caractérisé en ce que les organes de blocage sont actionnés par des moyens magnétiques ou motorisés.

13. Dispositif d'accouplement selon l'une quelconque des Revendications 1 à 12, caractérisé en ce qu'il est pourvu d'un cône de protection ou de centrage.

14. Dispositif d'accouplement selon l'une quelconque des Revendications 1 à 13, caractérisé en ce que les éléments d'accouplement (11; 21; 31) sont pourvus d'un contact lequel, lorsqu'on actionne l'organe complémentaire, déclenche un signal électrique, optique ou acoustique.

**Fig.1**

13  16  14  15  16

11  19  13  18  12  15

**Fig.2**

13

13

14

**Fig.3**

**Fig.4**

# Fig. 5

29 28 23 25

VI →

VI →

21

26 23 27 26 27 24 22

# Fig. 6

23

23

24

Fig. 7

29  28      VIII        25

21    26  23  27    24  26    27  22

VIII

Fig. 8

23

23

24

# Fig. 9

# Fig. 10

## Fig. 11

## Fig. 12